# EUROPEAN PATENT SPECIFICATION

(11) **EP 3 030 697 B1**
(45) Date of publication and mention of the grant of the patent: **11.10.2017**
(21) Application number: 14748191.5
(22) Date of filing: 04.08.2014
(51) Int. Cl.: C25D 3/66, C25D 7/00, C25D 5/34, F16B 33/00, C23F 13/08, C23F 13/14, C23C 2/06

(54) **STRUCTURE FOR USE IN A CORROSIVE ENVIRONMENT**
STRUKTUR ZUR VERWENDUNG IN EINER KORROSIVEN UMGEBUNG
STRUCTURE À UTILISER DANS UN ENVIRONNEMENT CORROSIF

(30) Priority: 05.08.2013 NL 2011269
(43) Date of publication of application: 15.06.2016
(73) Proprietor: Onderzoekscentrum voor Aanwending van Staal N.V., 9060 Zelzate (BE)
(72) Inventor: DE STRYCKER, Joost Remi Margueritte, B-9060 Zelzate (BE); VAN DEN BERGH, Krista Godelieve Oscar, B-9060 Zelzate (BE)
(74) Representative: EP&C
(86) International application number: PCT/EP2014/066701
(87) International publication number: WO 2015/018783

(56) References cited:
- WO-A2-01/00903
- DE-A1-102007 058 716
- JP-A- 2000 129 467
- US-A1- 2012 155 988

## Description

The invention pertains to a metal structure that is suitable for use in a corrosive environment, for example a structure that is to be arranged outdoors.

When a metal structure is used in a corrosive environment, there is a risk that the structural integrity of the structure is compromised by corrosion of one or more of the structural elements that form part of the structure. For example humidity can cause corrosion of the metal surfaces of the structural elements that are in contact with the humid environment directly. In addition to this corrosion due to the contact with a humid environment itself, arranging the metal structure in a humid environment may provoke galvanic corrosion of at least one of the structural elements, in particular when materials with a dissimilar composition are used for structural elements that are in electrical contact with each other. The dissimilar composition can give rise to a galvanic potential difference between the structural components having the dissimilar material composition. The moisture from the humid environment can act as an electrolyte that closes the electric circuit between the structural elements that are in electrical contact with each other. The closed electric circuit allows electrons to move from one structural element to the other, therewith causing galvanic corrosion.

It is known to provide metal structural elements with a coating in order to provide resistance against corrosion of their surfaces that are in direct contact with the corrosive, for example humid, environment. Such coatings can be organic coatings, e.g. paint, or metal coatings. For example, structural elements made of steel can be provided with a zinc coating by means of galvanizing.

The metallic coating materials that are used for coating structural elements are usually less noble than the material of the substrate, so in case a galvanic cell forms within the structural element itself, e.g. due to a damaged coating, the coating corrodes rather than substrate, so that the structural integrity of the structure at least initially is compromised to a lesser extent. This is called "cathodic protection".

The downside of the use of a less noble coating material however is that it can be affected by galvanic corrosion when an other structural element that is in electrical contact with the coating, is of a more noble material. In particular when a zinc coating is used to protect steel, this regularly occurs, as zinc is less noble than steel.

The "Corrosion Guides" as issued by the National Physical Laboratory of Middlesex, United Kingdom, in the series "Corrosion Control" comprise a volume called "Bimetallic Guide", which discusses galvanic corrosion and related design issues. On page 4 of this "Bimetallic Guide", a table is present which shows that zinc can be attacked by galvanic corrosion if it is combined with aluminum or aluminum alloys.

DE 102007058716 pertains to the mounting of a high alloy steel, such as chromium steel or chromium nickel steel by means of low alloy bolts. Due to the difference in corrosion potential, galvanic corrosion between the high alloy steel and the low alloy steel will occur if no further measures are taken. DE 102007058716 proposes to arrange an intermediate element between the high alloy steel and the low alloy steel, which intermediate element is significantly less noble than the high alloy steel and comparable to or less noble than the low alloy steel. The intermediate element serves as a sacrificial anode for the low alloy bolt.

However, a different situation occurs when two or more structural elements are used that are in electrical contact with each other, which structural elements both have to be provided with a coating in order to protect them from the environment in which they are arranged. In this situation, the material of the structural elements under the coating is not particularly relevant for the question whether galvanic corrosion will occur. The most important is the selection of the coating materials. If the coatings are not carefully selected, galvanic corrosion may occur even in a situation where the structural elements are made of the same material.

From the viewpoint of avoiding galvanic corrosion, it would be desirable to use the same coating material for both construction elements, but this is not always possible, for example if adhesive wear is to be avoided. Furthermore, the use of elements as sacrificial anodes is not always desired.

The object of the invention is to provide a structure that has resistance to galvanic corrosion and that at least offers an alternative choice of a combination of materials, in particular coating materials, as compared to what is known from the prior art.

This object is achieved by a structure for use in a corrosive environment, comprising:
- a primary structural element, which primary structural element is made of metal and is provided with a coating, which coating has a composition comprising zinc in a content of at least 40 wt% based on the weight of the coating,
- a secondary structural element, which secondary structural element is made of metal and is provided with a coating, which coating is an alloy comprising aluminum and manganese, in which alloy the content of aluminum and manganese together is at least 90 wt % based on the weight of the coating, which alloy comprises more aluminum than manganese by weight, and,
wherein the primary structural element and the secondary structural element are in electrical contact with each other.

The inventors have found that a primary structural element that is made of metal and is provided with a coating that has a composition comprising zinc (Zn) in a content of at least 40 wt% based on the weight of the coating, can in a corrosive environment be combined with a secondary structural element that is also made of metal but has a coating that is an alloy comprising aluminum (Al) and manganese (Mn), in which alloy the content of aluminum and manganese together is at least 90 wt % based on the weight of the coating, which alloy comprises more aluminum than manganese by weight. If those two structural elements are in electrical contact with each other, and the structure of which the structural elements form a part is arranged in a corrosive environment, a good resistance against galvanic corrosion is observed, even in case the corrosive environment is a saline humid environment.

Furthermore, it has been observed that the corrosion resistance for combination of coating materials according to the invention is largely independent of the relative size of the surface areas of the primary and secondary structural elements.

The structural elements being in electrical contact with each other means that the two structural elements are not electrically insulated from each other. For example, electrical contact is present when there is direct physical contact between the metal or metallic coating of the primary structural element and the metal or metallic coating of the secondary structural element. In an other example, electrical contact is present when the metal or metallic coating the primary structural element is connected to the metal or metallic coating of the secondary structural element via one or more conductive elements, for example via a metallic bolt or metal rings. In general, electrical contact is present when a path is provided that allows electrons to move from the primary structural element (including its coating) to the secondary structural element (including its coating) or vice versa. This path does not have to be a closed loop within the structure, it is for example possible that the path can be closed by the presence of an electrolyte, e.g. saline water.

In particular, good resistance to galvanic corrosion has been observed when the aluminum content in the coating of the secondary structural element is at least about 75 wt% based on the weight of the coating.

Preferably, the aluminum content in the coating of the secondary structural element is at least about 75 wt% based on the weight of the coating, and at least about 80 wt% of the remainder of the coating is manganese.

Preferably, the manganese content in the coating of the secondary structural element is between about 1 wt% and about 25 wt%, more preferably between about 5 wt% and about 18 wt%, based on the weight of the coating.

Examples of compositions of the aluminum manganese coating are: about 81-83 wt%, e.g. 82 wt%, aluminum, based on the weight of the coating and about 19-17 wt%, e.g. 18 wt%, manganese, based on the weight of the coating; about 84-86 wt%, e.g 85 wt%, aluminum, based on the weight of the coating and about 16-14 wt%, e.g.15 wt%, manganese, based on the weight of the coating; or about 94-96 wt%, e.g. 95 wt%, aluminum, based on the weight of the coating and about 6-4 wt%, e.g. 5 wt%, manganese, based on the weight of the coating.

Optionally, the aluminum manganese coating of the secondary structural element consists of aluminum, manganese and inevitable impurities.

The aluminum manganese alloy coating of the secondary structural element according to the invention also has good properties with respect to enhancing the corrosion resistance against corrosion due to direct contact with the corrosive environment. The addition of manganese to the aluminum has an effect on the morphology of the coating layer. It results in a dense structure with small crystallites. The grain size is generally smaller than in a pure aluminum coating that is deposited using electrochemical deposition from an ionic liquid.

The dense morphology of the aluminum manganese coating of the secondary structural element provides a good protection for the material of the substrate, as it makes a strong barrier between the substrate and the environment.

The aluminum manganese alloy that is used for the coating of the secondary structural element is less noble than steel, in particular less noble than the types of mild steel that are generally used in construction. So, in case a secondary element is made of steel, and the aluminum manganese coating on it becomes damaged, the coating provides cathodic protection for the steel substrate of the secondary structural element.

The aluminum manganese alloy is nobler than the zinc or zinc containing coating of the primary structural element. This in contrast to aluminum alloys such as aluminum zinc alloys, aluminum magnesium alloys, aluminum tin alloys or aluminum silicon alloys, which are less noble than zinc.

Preferably, the thickness of the coating of the secondary structural element is between about 1.5 µm and about 100 µm, preferably between about 5 µm and about 30 µm.

In a possible embodiment, the metal of the primary structural element and/or the secondary structural element is steel, for example mild steel. According to a commonly used definition, "mild steel" is the same as plain carbon steel.

In a possible embodiment, the metal of the primary structural element and/or the secondary structural element is steel with a carbon content of 0.5% or less, optionally carbon steel with a carbon content of 0.5% or less.

In a possible embodiment, the metal of the primary structural element and/or the secondary structural element is low alloy steel, which low alloy steel optionally contains 8% or less alloying elements.

In a possible embodiment, the metal of the primary structural element and/or the secondary structural element is steel, which steel is not stainless steel.

In a possible embodiment, the metal of the primary structural element or the secondary structural element is carbon steel with a carbon content of 0.5% or less, and the metal of the other of the primary structural element and the secondary structural element is low alloy steel, which low alloy steel optionally contains 8% or less alloying elements.

Suitable coatings for the primary structural element for example include zinc-coatings (e.g. of the type that is generally indicated in the art, for example in the draft European standard dEN10346:2013, by "Z"), zinc-iron alloy coatings (e.g. of the type that is generally indicated in the art, for example in the draft European standard dEN10346:2013, by "ZF"), zinc-aluminum alloy coatings (e.g. of the type that is generally indicated in the art, for example in the draft European standard dEN10346:2013, by "ZA"), zinc-magnesium alloy coatings (e.g. of the type that is generally indicated in the art, for example in the draft European standard dEN10346:2013, by "ZM") and aluminum-zinc alloy coatings (e.g. of the type that is generally indicated in the art, for example in the draft European standard dEN10346:2013, by "AZ").

Examples of suitable coatings for the primary structural element include coatings that can be obtained by galvanization (e.g. batch galvanization, hot-dip galvanization or electrogalvanization), coatings of Aluzinc®, coatings of Magnelis® and zinc coatings having at least about 90 wt% of pure zinc.

A possible coating material for the primary structural element is a hot-dip zinc coating (Z), which can be applied on a first metal substrate by immersing the first metal substrate in a molten bath containing a zinc content of at least about 99 wt% of the molten bath. Such a coating generally comprises about 99 wt% to about 99.9 wt% of zinc (based on the weight of the coating), the balance generally being aluminum and inevitable impurities. By providing the first metal substrate with such a coating, a primary structural element according to the invention can be obtained.

A possible coating material for the primary structural element is a hot-dip zinc-iron alloy coating (ZF), which can be applied on a first metal substrate by applying a zinc coating by immersing the first metal substrate in a molten bath containing a zinc content of at least about 99 wt% and a subsequent annealing which produces an iron-zinc coating with an iron content of normally about 8 wt% to about 12 wt% (based on the weight of the coating), the balance being mainly zinc. By providing the first metal substrate with such a coating, a primary structural element according to the invention can be obtained.

A possible coating material for the primary structural element is a hot-dip zinc-aluminum alloy coating (ZA), which can be applied on a first metal substrate by immersing the first metal substrate in a molten bath which is composed of zinc and approximately 5 wt% aluminum and small amounts of mischmetal. Such a coating generally comprises about 5 wt% of aluminum (based on the weight of the coating), the balance generally being zinc and the mischmetal. By providing the first metal substrate with such a coating, a primary structural element according to the invention can be obtained.

A possible coating material for the primary structural element is a hot-dip zinc-magnesium coating (ZM), which can be applied on a first metal substrate by passing the first metal substrate through a molten zinc bath with aluminum and magnesium contents in sum of about 1.5 wt% to about 8 wt%, the remainder being mainly zinc. Such a coating generally comprises aluminum and magnesium contents in sum of about 1.5 wt% to 8 about wt% (based on the weight of the coating), the remainder being mainly zinc. By providing the first metal substrate with such a coating, a primary structural element according to the invention can be obtained.

A possible coating material for the primary structural element is a hot-dip aluminum-zinc alloy coating (AZ), which can be applied on a first metal substrate by immersing the first metal substrate in a molten bath which is composed of about 55 wt% aluminum, about 1.6wt% silicon and the balance zinc. Such a coating generally comprises about 55 wt% aluminum, about 1.6 wt% silicon (based on the weight of the coating) and the balance zinc. By providing the first metal substrate with such a coating, a primary structural element according to the invention can be obtained.

A possible coating material for the primary structural element comprises about 2-8 wt% aluminum, about 0-5 wt% magnesium, about 0-0.3 wt% alloying elements, the balance being zinc and inevitable impurities. Such a coating for example comprises about 93.5 wt% zinc, about 3.5 wt% aluminum and about 3 wt% magnesium.

Another possible coating material for the primary structural element comprises about 43 wt% zinc, about 55 wt% aluminum and about 1.5-2 wt% silicon.

In general, a structure of the type to which the invention pertains comprises at least two types of structural elements. The first type of structural elements for example comprises a metal beam, profile, rod, strip, and/or sheet. Such structural elements form the framework of the structure and bear the mechanical loads that are exerted on the structure. The second type of structural elements comprises fasteners, supports and the like (e.g. bolts, nuts, screws, clips, clamps). They hold the structural elements of the first type together by connecting them to each other. The structural elements of the second type can alternatively or in addition be used for connecting other objects to the structural elements of the first type. Such objects could for example be solar panels, switch boxes or other electrical equipment, cables and/or sensors, or e.g. an exhaust system of a vehicle.

The primary structural element according to the invention can be a structural element of the first type or a structural element of the second type. The secondary structural element according to the invention can be a structural element of the first type or a structural element of the second type.

Optionally, the primary structural element according to the invention is a structural element of the first type and the secondary structural element according to the invention is a structural element of the second type.

Optionally, the structure according to the invention comprises a primary structural element according to the invention which is a structural element of the first type, which is connected to a structural element of the first type of a different material (e.g. stainless steel or aluminum). In this possible embodiment, both structural elements of the first type are connected to each other by means of a structural element of the second type, which is a secondary element according to the invention. Such a structure could for example comprise a beam that is provided with a coating that has a composition comprising zinc in a content of at least 40 wt% based on the weight of the coating, which is connected to a beam of for example stainless steel or aluminum by means of a bolt (or a bolt and a nut), which bolt is provided with a coating that is an alloy comprising aluminum and manganese, in which alloy the content of aluminum and manganese together is at least 90 wt % based on the weight of the coating, which alloy comprises more aluminum than manganese by weight.

Optionally, the primary structural element according to the invention is a structural element of the first type and the secondary structural element according to the invention is also a structural element of the first type.

Optionally, the primary structural element according to the invention is a structural element of the second type and the secondary structural element according to the invention is a structural element of the first type.

Optionally, the primary structural element according to the invention is a structural element of the first type and the structure further comprises one or more secondary structural elements according to the invention that are a structural element of the first type as well as comprises one or more secondary structural elements according to the invention that are a structural element of the second type.

Optionally, the structure according to the invention comprises a primary structural element according to the invention which is a structural element of the first type and a secondary structural element according to the invention which is a structural element of the second type, and an object, e.g. a functional device, that is connected to the primary structural element by means of the secondary structural element. Such a structure could for example comprise a beam that is provided with a coating that has a composition comprising zinc in a content of at least 40 wt% based on the weight of the coating, and a further object (e.g a functional device like a solar panel, a support for a solar panel, a switch box or other type electrical equipment, a cable and/or sensor, or e.g. an exhaust system of a vehicle) which is of a different material (e.g. stainless steel or aluminum), which further object is connected to the beam with the zinc coating by means of a bolt (or a bolt and a nut) that is provided with a coating that is an alloy comprising aluminum and manganese, in which alloy the content of aluminum and manganese together is at least 90 wt % based on the weight of the coating, and which alloy comprises more aluminum than manganese by weight.

It has been observed that the corrosion resistance for combination of coating materials according to the invention is largely independent of the relative size of the surface areas of the primary and secondary structural elements. So, the primary structural element can have a larger surface area than the secondary structural element, or the primary structural element can have a smaller surface area than the secondary structural element, or the primary structural element and the secondary structural element can have substantially the same surface area. This is a further advantage of the invention, as many known corrosion resistant coating material combinations require that one coating material of the combination has to the used for the structural element with larger surface area and the other coating material of the combination has to the used for the structural element with the smaller surface area.

In a possible embodiment, the primary structural element has a larger surface area than the secondary structural element. If in such an embodiment galvanic corrosion would take place between the coatings of the primary and secondary structural elements despite the relatively high corrosion resistance of this combination of coatings, then the coating on the primary structural element will be affected. This is because the coating of the secondary structural element is slightly nobler than the coating of the primary structural element. However, as the primary structural element has the larger surface area, the corrosion will be more spread out over the surface than when the primary structural element would have a smaller surface area than the secondary structural element.

A structure according to the invention can for example be used as a mounting system for solar panels or be a part of such a mounting system. It can however also be used in other structures, like bridges, power pylons, cranes, support structures, or in automotive applications such as underbodies or chassis or other parts of cars or trucks, or parts of other vehicles, e.g. motorcycles.

The structure according to the invention can be arranged or used in a corrosive environment, for example a humid environment, optionally a saline humid environment, for example outdoors, for example on land or in a marine environment or on land in an area close to the sea. For example, the structure can be a support structure for solar panels or can be used as a mounting system for solar panels or can be a part of such a mounting system, allowing to arrange solar panels in corrosive environment, for example in areas close to the sea or even in a marine environment, e.g. on board of a ship or drilling rig. For example, the structure can be a vehicle or a part of a vehicle.

The coatings of the primary and secondary structural elements can be applied using methods that are generally known in the art. Optionally, the aluminum manganese alloy coating is applied to the secondary structural element by means of electrodeposition from an ionic liquid. By using this method for applying the aluminum manganese coating, a dense coating layer with small crystallites and little or no cracks or voids can be obtained.

It is desirable that the aluminum manganese coating of the secondary structural element adheres well to the substrate. It has been found that in case electrodeposition from an ionic liquid is used to apply the aluminum manganese coating, it is advantageous to give the substrate onto which the aluminum manganese coating will be applied a pretreatment by means of etching, optionally by means of electrochemical etching, optionally by means of electrochemical etching in an ionic liquid.

The etching roughens the surface of the substrate, which results in a better adhesion of the coating onto the substrate. The etching also removes for example oxides or contamination from the surface of the substrate. This also improves the adherence of the coating.

It is possible to carry out the electrochemical etching in the same type of ionic liquid as the ionic liquid in which the electrochemical deposition of the aluminum manganese coating takes place. It is even possible to carry out the electrochemical etching in the same bath of ionic liquid as the bath of ionic liquid in which the electrochemical deposition of the aluminum manganese coating takes place.

In a possible embodiment, a voltage in the range of about 0.5 V to about 1.5 V versus an aluminum electrode is used during the electrochemical etching, for example during an etch time of about 1 second to about 90 seconds.

In a possible embodiment, prior to carrying out the pretreatment of the substrate by etching, the substrate is cleaned and/or degreased. This can for example be done by means of an acid, such as sulfuric acid.

In a possible embodiment, the ionic liquid is stirred or otherwise agitated during the electrochemical deposition of the aluminum manganese coating onto the substrate to form the secondary structural element. This prevents that the surface is damaged due to a lack of reactive substances near the surface to form the coating.

In a possible embodiment, the ionic liquid is a combination of 1-ethyl-3-methylimidazoliumchloride (EMIMCl) and aluminum chloride (AlCl₃), preferably in a mol ratio of about 1:1.5, and further comprises MnCl₂, preferably between about 0.01 wt% and about 5 wt% MnCl₂, optionally between about 0.02 and about 1 wt% MnCl₂, based on the weight of the ionic liquid.

In a possible embodiment, the current density during the deposition of the aluminum manganese coating is between about 2 A/dm² and about 7 A/dm², preferably about 4 A/dm².

In a possible embodiment, the process of the deposition of the aluminum manganese coating is carried out at a process temperature between about 45°C and about 100°C, optionally between 75°C and 95°C, optionally at about 90°C.

In a possible embodiment, the secondary structural element is cleaned after the deposition of the aluminum manganese coating, for example by water and/or acetone.

In a possible embodiment, the deposition time of the deposition of the aluminum manganese coating is between about 1 minute and about 60 minutes, optionally between about 3 minutes and about 50 minutes, optionally between about 7 minutes and about 15 minutes, optionally between about 8 minutes and about 12 minutes, optionally about 10 minutes.

The invention will be described in more detail below under reference to the drawing, in which in a non-limiting manner exemplary embodiments of the invention will be shown.

The drawing shows in:
Fig. 1 : a first example of a structure according to the invention,
Fig. 2 : a second example of a structure according to the invention,
Fig. 3 : an example of structures according to the invention being used in a mounting system for a solar panel,
Fig. 4 : a first image of the aluminum manganese coating of the secondary structural element obtained by electrochemical deposition from an ionic liquid,
Fig. 5 : a second image of the aluminum manganese coating of the secondary structural element obtained by electrochemical deposition from an ionic liquid,
Fig. 6: results of accelerated galvanic corrosion tests that have been carried out on different combinations of materials in a saline humid environment, shown as photos of bolts in a profile,
Fig. 7: results of the accelerated galvanic corrosion tests of fig. 6, photos of the profile only,
Fig. 8: results of further accelerated corrosion tests that have been carried out on bolts of different materials.

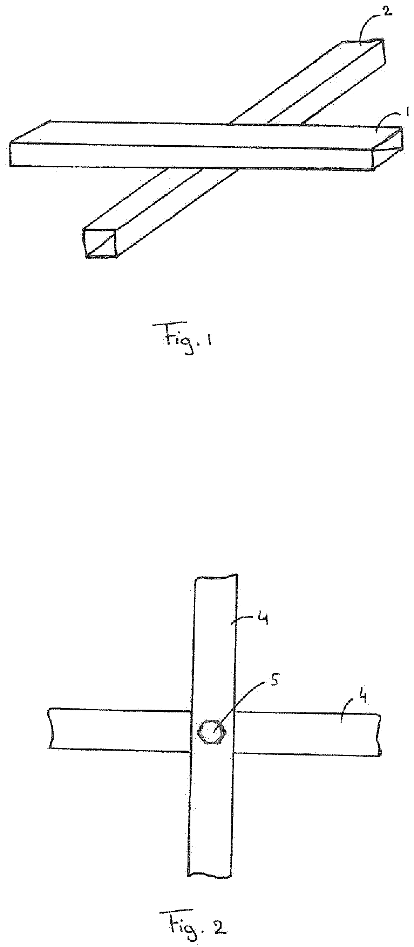

Fig. 1 shows a first example of a structure according to the invention.

The structure of fig. 1 has a primary structural element 1, which in this example is a beam. It also has a secondary structural element 2, which also is a beam. The primary structural element 1 and the second structural element 2 are in electrical contact with each other. When the structure is arranged in a corrosive, e.g. a humid, environment, the moisture will act as an electrolyte, closing the electric circuit between the primary structural element 1 and the secondary structural element 2. If the moisture is saline, it will be an effective electrolyte, increasing the risk of galvanic corrosion.

The primary structural element 1 and the secondary structural element 2 can be fixed to each other, e.g. by welds or by bolts, but this is not necessary as long as they are in electrical contact with each other, e.g. via electrically conductive structural elements.

Both beams are made of metal, e.g. steel, and are provided with a coating.

The coating of the primary structural element 1 is a metal coating, of which a main component is zinc (Zn). The coating of the primary structural element comprises at least 40 wt% zinc, based on the weight of the coating. The primary structural element 1 can for example have a zinc-coating (e.g. Z-type in accordance with draft European Standard dEN10346:2013), a zinc-iron alloy coating (e.g. ZF-type in accordance with draft European Standard dEN10346:2013), a zinc-aluminum coating (e.g. ZA-type in accordance with draft European Standard dEN10346:2013) a zinc-magnesium alloy coating (e.g. ZM-type in accordance with draft European Standard dEN10346:2013), or an aluminum-zinc alloy coating (e.g. AZ-type in accordance with draft European Standard dEN10346:2013).

The coating of the secondary structural element 2 is an aluminum manganese coating, which means that the material of the coating is an alloy comprising aluminum and manganese. The coating comprises more aluminum than manganese by weight and the content of aluminum and manganese together is at least 90 wt % based on the weight of the coating.

Preferably, the aluminum content in the coating of the secondary structural element 2 is at least about 75 wt% based on the weight of the coating. Optionally, at least about 80wt% of the remainder of the coating is manganese. For example, the aluminum manganese coating of the secondary structural element comprises about 81-83 wt%, e.g. 82 wt%, aluminum, based on the weight of the coating and about 19-17 wt%, e.g. 18 wt%, manganese, based on the weight of the coating; about 84-86 wt%, e.g 85 wt%, aluminum, based on the weight of the coating and about 16-14 wt%, e.g. 15 wt%, manganese, based on the weight of the coating; or about 94-96 wt%, e.g. 95 wt%, aluminum, based on the weight of the coating and about 6-4 wt%, e.g. 5 wt%, manganese, based on the weight of the coating.

Fig. 2 shows a second example of a structure according to the invention.

The structure of fig. 2 comprises two strips 4. These strips are primary structural elements, and are made of metal and provided with a coating that has a zinc content of at least 40 wt% based on the weight of the coating. For example, the strips 4 are galvanized or otherwise provided with for example a zinc-coating (e.g. Z-type in accordance with draft European Standard dEN10346:2013), a zinc-iron alloy coating (e.g. ZF-type in accordance with draft European Standard dEN10346:2013), a zinc-aluminum coating (e.g. ZA-type in accordance with draft European Standard dEN10346:2013) a zinc-magnesium alloy coating (e.g. ZM-type in accordance with draft European Standard dEN10346:2013), or an aluminum-zinc alloy coating (e.g. AZ-type in accordance with draft European Standard dEN10346:2013).

The strips 4 are connected to each other by a bolt 5. The bolt is provided with a coating that is an alloy comprising aluminum and manganese, wherein the coating comprises more aluminum than manganese by weight and the content of aluminum and manganese together is at least 90 wt % based on the weight of the coating. In the structure of fig. 2, bolt 5 is a secondary structural element.

Preferably, the aluminum content in the coating of the bolt 5 is at least about 75 wt% based on the weight of the coating. Optionally, at least about 80wt% of the remainder of the coating is manganese. For example, the aluminum manganese coating of the bolt comprises about 81-83 wt%, e.g. 82 wt%, aluminum, based on the weight of the coating and about 19-17 wt%, e.g. 18 wt%, manganese, based on the weight of the coating; about 84-86 wt%, e.g. 85 wt%, aluminum, based on the weight of the coating and about 16-14 wt%, e.g.15 wt%, manganese, based on the weight of the coating; or about 94-96 wt%, e.g. 95 wt%, aluminum, based on the weight of the coating and about 6-4 wt%, e.g. 5 wt%, manganese, based on the weight of the coating.

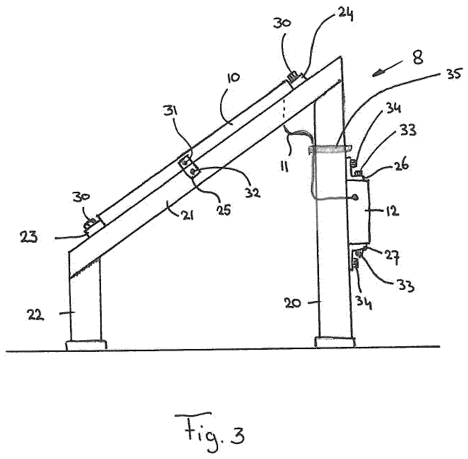

Fig. 3 shows an example of structures according to the invention being used in a mounting system for a solar panel, in side view.

In the embodiment of fig. 3, a solar panel 10 is mounted onto a support structure 8. The support structure comprises a first leg 20, a second leg 22 and a slanting beam 21 that extends between the first leg 20 and the second leg 22. The slanting beam 21 is in this embodiment welded to the first leg 20 and the second leg 22 to form a portal. Although not visible in fig. 3, the support structure comprises a second portal similar the one that is made up by the first leg 20, the slanting beam 21 and the second leg 22. This second portal is arranged next to the portal that is made up by the first leg 20, the slanting beam 21 and the second leg 22.

The support structure 8 further comprises a bottom strip 23 and a top strip 24. The bottom strip 23 and the top strip 24 extend from the portal that is made up by the first leg 20, the slanting beam 21 and the second leg 22 to the second portal. The bottom strip 23 and the top strip 24 are arranged adjacent to the solar panel 10, and therewith prevent that the solar panel 10 slides up or down on the slanting beam 21.

The bottom strip 23 and the top strip 24 are connected to the portal that is made up by the first leg 20, the slanting beam 21 and the second leg 22 and the second portal by bolts 30.

The support structure 8 further comprises at least one side plate 25. The side plate 25 is connected to the slanting beam 21 by a bolt 32 and to the solar panel 10 by a bolt 31. The side plate 25 prevents the solar panel from moving sideways over the slanting beam 21.

A cable 11 connects the solar panel 10 to a switchbox 12. The switchbox 12 is connected to the first leg 20 by a bottom support profile 27 and a top support profile 26. The top support profile 26 and the bottom support profile 27 are connected to the switchbox by bolts 33 and to the first leg 20 by bolts 34.

The cable 11 is strapped to the first leg by a metallic cable strap 35.

In the support structure 8 of fig. 3, the first leg 20, the second leg 22, the slanting beam 21, the second portal, the bottom strip 23, the top strip 24, the side plate 25, the top support profile 26 and the bottom support profile 27 are structural elements of the first type. At least one of them, but preferably all of them are primary structural elements in accordance with the invention. The first leg 20, the second leg 22, the slanting beam 21, the second portal, the bottom strip 23, the top strip 24, the side plate 25, the top support profile 26 and/or the bottom support profile 27 qualify as primary structural element in accordance with the invention if they are made of metal and provided with a coating that has a composition with a zinc contents of at least 40 wt%. So, for example, they are galvanized or otherwise provided with for example a zinc-coating (e.g. Z-type in accordance with draft European Standard dEN10346:2013), a zinc-iron alloy coating (e.g. ZF-type in accordance with draft European Standard dEN10346:2013), a zinc-aluminum coating (e.g. ZA-type in accordance with draft European Standard dEN10346:2013) a zinc-magnesium alloy coating (e.g. ZM-type in accordance with draft European Standard dEN10346:2013), or an aluminum-zinc alloy coating (e.g. AZ-type in accordance with draft European Standard dEN10346:2013).

In the support structure 8 of fig. 3, the bolts 30, 31, 32, 33, 34 and the metal strap 35 are structural elements of the second type. At least one of them, but preferably all of them are secondary structural elements in accordance with the invention. The bolts 30, 31, 32, 33, 34 and/or the metal strap 35 qualify as secondary structural element in accordance with the invention if they are provided with a coating which is an alloy comprising aluminum and manganese as the main components, which coating comprises more aluminum than manganese by weight and the content of aluminum and manganese together is at least 90 wt %.

Preferably, the aluminum content in the coating of the bolts 30, 31, 32, 33, 34 and the metal strap 35 is at least 75 wt%. For example, the aluminum manganese coating of the bolts 30, 31, 32, 33, 34 and the metal strap 35 comprises about 82 wt% aluminum and about 18 wt% manganese, or about 85 wt% aluminum and about 15 wt% manganese or about 95 wt% aluminum and about 5 wt% manganese.

Optionally, not all of the first leg 20, the second leg 22, the slanting beam 21, the second portal, the bottom strip 23, the top strip 24, the side plate 25, the top support profile 26 and the bottom support profile 27 are provided with a coating which contains at least 40 wt% zinc. Optionally, not all bolts 30, 31, 32, 33, 34 and/or the metal strap 35 are provided with a coating which is an alloy comprising aluminum and manganese as the main components, which coating comprises more aluminum than manganese by weight and the content of aluminum and manganese together is at least 90 wt %. However, the support structure 8 comprises at least one primary structural element that is made of metal and that is provided with a coating which has a composition that comprises at least 40 wt% zinc, and at least one secondary structural element that is in electrical contact with this particular primary structural element, which secondary structural element is made of metal and is provided with a coating which is an alloy comprising aluminum and manganese as the main components, the coating of said secondary structural element comprising more aluminum than manganese and the content of aluminum and manganese together being at least 90 wt%.

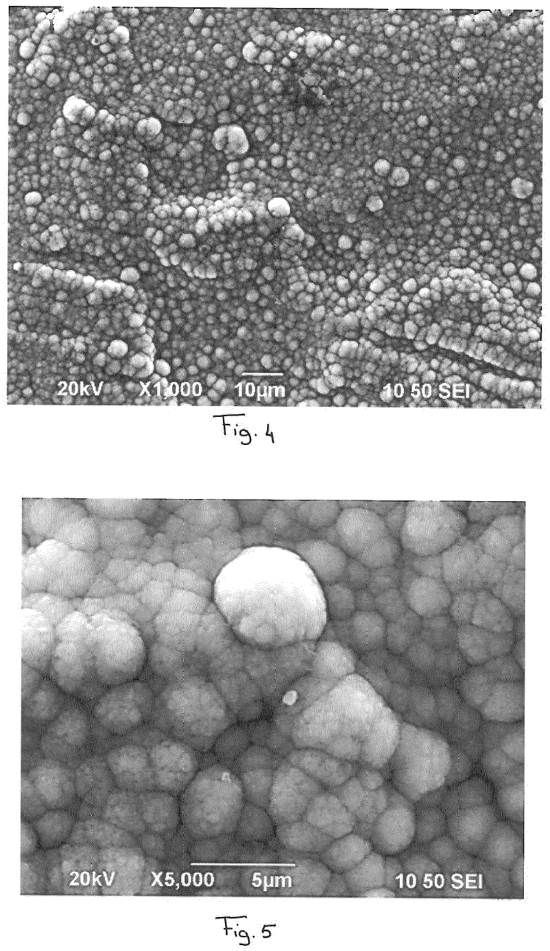

Fig. 4 and fig. 5 show images of the aluminum manganese coating of the secondary structural element obtained by electrochemical deposition from an ionic liquid, as is part of the method of claim 14. The images of fig. 4 and fig. 5 have been obtained by an electron microscope. The fine grained and dense structure of the aluminum manganese coating is clearly visible.

A structure according to the invention can for example be manufactured by a method in accordance with claim 14, optionally according to a combination of claim 14 with the dependent claims 15-22.

According to this method, a first metal substrate is provided with a coating that comprises at least 40 wt% zinc based on the weight of the coating. This can be done by methods known in the art, such as galvanizing, e.g. batch galvanizing, hot-dip galvanizing or electrogalvanizing. Thereby, a primary structural element according to the invention is obtained.

Further, a second metal substrate is provided onto which a coating will be applied that is an alloy comprising aluminum and manganese, which alloy comprises more aluminum than manganese by weight and in which alloy the content of aluminum and manganese together is at least 90 wt % based on the weight of the coating.

Preferably, the second metal substrate is cleaned and/or degreased before the other method steps are carried out. The cleaning and/or degreasing can be carried out for example by using an acid, e.g. sulfuric acid.

After the optional cleaning and/or degreasing, the second metal substrate is etched, optionally electrochemically etched, such that the surface of the substrate is roughened and/or contamination and/or oxides are removed from the surface of the second substrate as well .

The second metal substrate is arranged in a bath of ionic liquid. This can be done either before or after the electrochemical etching. If the second substrate is arranged in the bath of ionic liquid before the etching, the etching can be carried out in this bath of ionic liquid in the form of electrochemical etching.

After the etching, the second substrate can be removed from the bath of ionic liquid and transferred to a second bath of ionic liquid, in which the deposition of the aluminum manganese coating is applied. Alternatively, the deposition of the aluminum manganese coating on the second metal substrate can take place in the same bath as in which the electrochemical etching took place.

Alternatively, it is possible that the etching does not take place in an ionic liquid but for example in a aqueous solution. The etching does not have to be an electrochemical etching, it can for example alternatively be chemical etching. In case the etching does not take place in the ionic liquid from which the aluminum manganese coating is deposited, the second metal substrate is arranged in the bath of ionic liquid after the etching.

In case electrochemical etching is applied, the etching can for example be carried out at a voltage in the range of about 0.5V to about 1.5V versus an aluminum electrode, during about 1 to about 90 seconds.

After the etching, the aluminum manganese coating is applied to the second substrate. A source of aluminum and manganese is provided and the coating is deposited by means of electrodeposition from an ionic liquid, which for example is a combination of 1-ethyl-3-methylimidazoliumchloride (EMIMCI) and aluminum chloride (AlCl₃), and further comprises MnCl₂. The mol ratio between 1-ethyl-3methylimidazoliumchloride (EMIMCI) and aluminum chloride (AlCl₃) is preferably between about 1:1 and about 1:2.5, more preferably about 1: 1.5. Preferably, the content of MnCl₂ is between about 0.01 wt% and about 5 wt%, optionally between 0.02 and 1 wt%, based on the weight of the ionic liquid.

Optionally, the deposition takes place in waterfree conditions, for example under an argon atmosphere. Such conditions are in particular suitable when a combination of 1-ethyl-3-methylimidazoliumchloride (EMIMCI) and aluminum chloride (AlCl₃), further comprising MnCl₂ is used to deposit the aluminum manganese coating from.

Preferably, during the deposition of the aluminum manganese coating, the ionic liquid is agitated, for example by stirring it. This ensures that sufficient reactive components to form the aluminum manganese coating are available in the vicinity of the surface of the second metal substrate.

It was found that a suitable current density for the deposition process of the aluminum manganese coating is between about 2 A/dm² and about 7 A/dm², preferably about 4 A/dm².

Optionally, the thickness of the deposited aluminum manganese coating is between about 1.5 µm and about 100 µm, preferably between about 5 µm and about 30 µm.

After the deposition of the aluminum manganese coating, the second substrate has become a secondary structural element in accordance with the invention.

After the deposition of the aluminum manganese coating, the second substrate is taken out of the bath of ionic liquid and optionally cleaned, for example by acetone and/or water.

Optionally, the electrochemical etching of the second metal substrate and/or the electrodeposition of the aluminum manganese coating onto the second metal substrate take place at a process temperature between about 45°C and about 100°C, optionally between about 75°C and about 95°C, optionally at about 90°C.

Connecting the primary structural element and the secondary structural element to each other such that the primary structural element and the secondary structural element are in electrical contact with each other finishes the manufacturing of the structure according to the invention.

Optionally, the coating of the primary structural element is applied in one of the following ways:
- by immersing the first metal substrate in a molten bath containing a zinc content of at least about 99 wt%,
- by applying a zinc coating by immersing the first metal substrate in a molten bath containing a zinc content of at least about 99 wt% and a subsequent annealing which produces an iron-zinc coating with an iron content of normally about 8 wt% to about 12 wt% based on the weight of the coating,
- by immersing the first metal substrate in a molten bath which is composed of zinc and approximately 5 wt% aluminium and small amounts of mischmetal.
- by passing the first metal substrate through a molten zinc bath with aluminium and magnesium contents in sum of about 1.5 wt% to about 8 wt%.
- by immersing the first metal substrate in a molten bath which is composed of about 55 wt% aluminium, about 1.6 wt% silicon and the balance zinc.

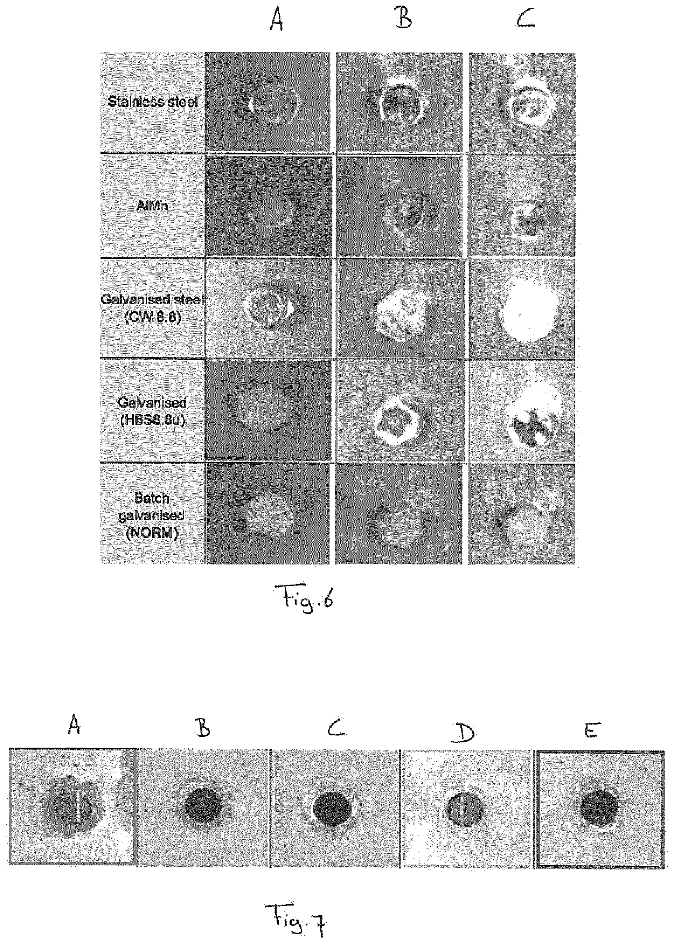

Fig. 6 and fig. 7 show results of accelerated cyclic galvanic corrosion tests that have been carried out on different combinations of materials in a humid and saline environment.

The accelerated corrosion tests have been carried out as follows: a bolt of stainless steel, a bolt with an aluminum manganese coating in accordance with the invention and several types of galvanized bolts were arranged in a profile provided with a ZM-type coating about 93.5 wt% Zn, about 3.5 wt% Al and about 3 wt% Mg.

The profile with the bolts was subjected to the following test cycle:
- 24 hours salt spray test in accordance with ASTM_B 117), with 5% NaCl at 35°C,
- four days at a condensate water climate, each day having 8 hours at 40°C and 95% relative humidity and 16 hours at 20°C and 75% relative humidity,
- two days at room climate, at 20°C and 65% relative humidity.

This test cycle was repeated six times, so a total of six weeks testing took place.

The stainless steel bolt and galvanized bolts that were used were regular commercially available bolts. Chemical analysis showed the stainless steel bolt was made of a 304-type stainless steel, having about 18 wt% Cr, about 8 wt% Ni, about 2 wt% Cu, about 1.7 wt% Mn, about 0.25 wt% Si and about 0.25 wt% Mo as alloying elements. It is identified by the supplier as DIN 916 inox.

The galvanized bolts are in fig. 6 identified by the text on the respective heads of the bolts. The bolt indicated by "NORM 8.8" is galvanized according to EN ISO 4042 and EN 12329 as supplied by Eriks + Baudoin and Fabory. The coating on this bolt was about 19 µm thick and contained Zn, Al, Si and Ti.

The bolt indicated by "HBS 8.8U" is galvanized according to ISO 10684 as supplied by Eriks + Baudoin and Fabory. The coating on this bolt was about 56 µm thick and contained Zn and Pb.

The bolt indicated by "CW 8.8" is galvanized. The coating on this bolt was about 7 µm thick and contained mainly Zn.

The bolt indicated by "JD 8.8" is electrogalvanized according to EN ISO 4042 and EN 12329.The coating on this bolt was about 7 µm thick and contained mainly Zn.

Fig. 6 shows the combination of the profile and the bolt. Column A of fig. 6 shows the situation at the start of the test. Column B of fig. 6 shows the situation after one week and column C of fig. 6 shows the situation after six weeks, so at the end of the test.

Fig. 7 shows the profile only. Picture A of fig. 7 shows the profile near the hole in which the stainless steel bolt was present during the test. Picture B of fig. 7 shows the profile near the hole in which the batch galvanized NORM bolt was present during the test. Picture C of fig. 7 shows the profile near the hole in which the galvanized HBS 8.8u bolt was present during the test. Picture D of fig. 7 shows the profile near the hole in which the electrogalvanized JD 8.8 bolt was present during the test. Picture E of fig. 7 shows the profile near the hole in which the bolt with the aluminum manganese coating according to the invention was during present the test.

After the full test of six weeks, the combination of the ZM-coated profile and the stainless steel bolt showed white corrosion of the ZM-coating. The stainless steel bolt was unaffected.

After the full test of six weeks, the combination of the ZM-coated profile and the galvanized CW 8.8 bolt showed some white corrosion of the ZM-coating, and the entire bolt was corroded and showed a lot of red rust.

After the full test of six weeks, the combination of the ZM-coated profile and the galvanized HBS 8.8u bolt showed some white corrosion of the ZM-coating, and the bolt showed quite some red rust and white oxides.

After the full test of six weeks, the combination of the ZM-coated profile and the batch galvanized NORM bolt showed hardly any white corrosion of the ZM-coating, but the bolt was covered with white oxides.

After the full test of six weeks, for the combination of the ZM-coated profile and the electrically galvanized JD 8.8, the bolt showed a lot of red rust.

After the full test of six weeks, the combination of the ZM-coated profile and the bolt with the aluminum manganese coating according to the invention showed no white corrosion or other degradation of the ZM-coating. The bolt had some red rust, but upon closer inspection it showed that this was only at places where the coating did not adhere to the bolt. Where the coating was present, no degradation of the coating was observed.

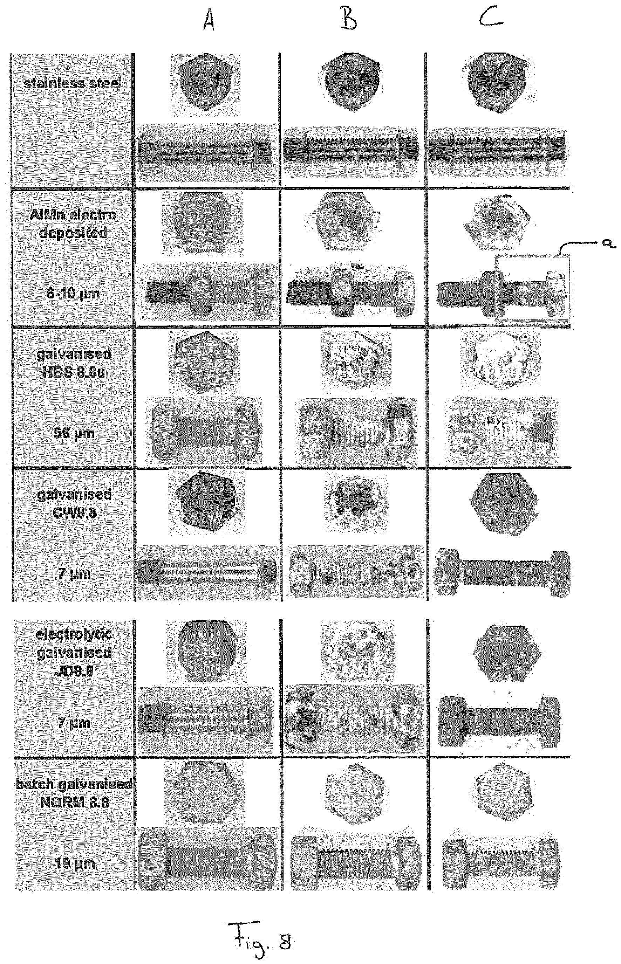

Fig. 8 shows the result of accelerated corrosion tests in which the bolts as such were subjected to a humid and saline environment. This test is mainly directed at determining the resistance against corrosion due to the direct contact with the humid and saline environments. No galvanic corrosion was induced in this test.

The test cycle and the types of bolts that were tested were the same as for the galvanic corrosion test of which fig. 6 and 7 show the results.

Column A of fig. 8 shows the situation at the start of the test. Column B of fig. 8 shows the situation after one week and column C of fig. 8 shows the situation after six weeks, so at the end of the test. With respect to the with the aluminum manganese coating according to the invention, it must be noted that only the top of the bolt, which is the part enclosed by the box "a" in column C of fig. 8, was provided with the aluminum manganese coating according to the invention.

The stainless steel bolt came out of this test rather clean. It was not affected by corrosion.

Also the bolt that was coated with the aluminum manganese coating according to the invention came out of the test with hardly any corrosion, at least on the part of the bolt that was coated with the aluminum manganese coating according to the invention.

The galvanized bolt indicated as "HBS 8.8U" came out of the test with a lot of white oxides on its surface.

The galvanized bolts indicated as "CW 8.8" and "JD 8.8"came out of the test covered with red rust.

The galvanized bolt indicated as "NORM 8.8" came out of the test with white oxides on its surface, although less than the bolt "HBS 8.8U" showed.

## Claims

1. Structure for use in a corrosive environment, comprising:
- a primary structural element (1), which primary structural element (1) is made of metal and is provided with a coating, which coating has a composition comprising zinc in a content of at least 40 wt% based on the weight of the coating,
- a secondary structural element (2), which secondary structural element (2) is made of metal and is provided with a coating, which coating is an alloy comprising aluminum and manganese, in which alloy the content of aluminum and manganese together is at least 90 wt % based on the weight of the coating, which alloy comprises more aluminum than manganese by weight, and,
wherein the primary structural element (1) and the secondary structural element (2) are in electrical contact with each other.

2. Structure according to claim 1,
wherein the metal of the primary and/or the secondary structural element (2) is steel, for example mild steel.

3. Structure according to claim 2,
wherein the metal of the primary structural element (1) and/or the secondary structural element (2) is steel with a carbon content of 0.5% or less, and/or
wherein the metal of the primary structural element (1) and/or the secondary structural element (2) is low alloy steel, which low alloy steel optionally contains 8% or less alloying elements.

4. Structure according to any of the preceding claims,
wherein the structure further comprises a functional device, wherein the functional device is connected to a primary structural element (1) by a secondary structural element (2),
wherein optionally the functional device is one of a solar panel, a switch box, a cable, a sensor, an exhaust system.

5. Structure according to any of the preceding claims,
wherein the aluminum content in the coating of the secondary structural element (2) is at least 75 wt% based on the weight of the coating, and optionally at least 80 wt% of the remainder of the coating is manganese.

6. Structure according to claim 5,
wherein the coating of the secondary structural element (2) comprises 81-83 wt% aluminum and 19-17 wt% manganese, based on the weight of the coating, or
wherein the coating of the secondary structural element (2) comprises 84-86 wt% aluminum and 16-14 wt% manganese, based on the weight of the coating, or
wherein the coating of the secondary structural element (2) comprises 94-96 wt% aluminum and 6-4 wt% manganese, based on the weight of the coating.

7. Structure according to any of the preceding claims,
wherein the coating of the primary structural element (1) is a zinc coating having at least 90 wt% of pure zinc, a zinc-iron alloy coating, a zinc-aluminum alloy coating, a zinc-magnesium alloy coating or an aluminum-zinc alloy coating,
wherein optionally the coating of the primary structural element (1) is a hot-dip coating.

8. Method for manufacturing a structure according to any of the preceding claims,
which method comprises:
- providing a first metal substrate,
- providing the first metal substrate with a coating having a composition comprising zinc in a content of at least 40 wt% based on the weight of the coating, thereby obtaining the primary structural element (1),
- providing a second metal substrate,
- arranging the second metal substrate in a bath of ionic liquid,
- etching the second metal substrate,
- providing a source of aluminum and manganese,
- electrochemically depositing a coating from the ionic liquid onto the second metal substrate, which coating is an alloy comprising aluminum and manganese, in which alloy the content of aluminum and manganese together is at least 90 wt % based on the weight of the coating, which alloy comprises more aluminum than manganese by weight, thereby obtaining the secondary structural element (2), and optionally, during this electrochemical deposition, agitating the ionic liquid,
- connecting the primary structural element (1) and the secondary structural element (2) to each other such that the primary structural element (1) and the secondary structural element (2) are in electrical contact with each other.

9. Method according to claim 8,
wherein the ionic liquid is a combination of 1-ethyl-3-methylimidazoliumchloride (EMIMCI) and aluminum chloride (AlCl₃), preferably in a mol ratio of 1:1.5, and further comprises preferably between 0.01 wt% and 5 wt% optionally between 0.02 wt% and 1 wt% based on the weight of the ionic liquid.

10. Method according to any of the claims 8-9,
wherein the etching of the second metal substrate and the electrochemical deposition of the coating of an alloy comprising aluminum and manganese are carried out in the same bath of ionic liquid.

11. Method according to any of the claims 8-10,
wherein the etching of the second metal substrate is electrochemical etching,
wherein optionally the electrochemical etching of the second metal substrate is carried out at a voltage between 0.5 V and 1.5 V versus an aluminum electrode, preferably during 1 second to 90 seconds.

12. Method according to any of the claims 8-11,
wherein the electrochemical deposition of the coating which is an alloy comprising aluminum and manganese has a process parameter which is the current density, which current density is between 2 A/dm² and 7 A/dm², preferably 4 A/dm².

13. Method according to any of the claims 8-12,
wherein the coating of the primary structural element (1) is applied in at least one of the following ways:
- by immersing the first metal substrate in a molten bath containing a zinc content of at least 99 wt%,
- by applying a zinc coating by immersing the first metal substrate in a molten bath containing a zinc content of at least 99 wt% and a subsequent annealing which produces an iron-zinc coating with an iron content of normally 8 wt% to 12 wt% based on the weight of the coating,
- by immersing the first metal substrate in a molten bath which is composed of zinc and approximately 5 wt% aluminum and small amounts of mischmetal,
- by passing the first metal substrate through a molten zinc bath with aluminum and magnesium contents in sum of 1.5 wt% to 8 wt%.
- by immersing the first metal substrate in a molten bath which is composed of 55 wt% aluminum, 1.6 wt% silicon and the balance zinc.

14. Method according to any of the claims 8-13,
wherein the material of first metal substrate and/or the second metal substrate is steel with a carbon content of 0.5% or less.

15. Method according to any of the claims 8-14,
wherein the material of first metal substrate and/or the second metal substrate is low alloy steel, which low alloy steel optionally contains 8% or less alloying elements.

## Patentansprüche

1. Struktur zur Verwendung in einer korrosiven Umgebung, umfassend:
- ein primäres Strukturelement (1), wobei das primäre Strukturelement (1) aus Metall hergestellt und mit einer Beschichtung versehen ist, wobei die Beschichtung eine Zink enthaltende Zusammensetzung mit einem Zinkgehalt von mindestens 40 Gew.-%, bezogen auf das Gewicht der Beschichtung, aufweist,
- ein sekundäres Strukturelement (2), wobei das sekundäre Strukturelement (2) aus Metall hergestellt und mit einer Beschichtung versehen ist, wobei die Beschichtung eine Aluminium- und Mangan aufweisende Legierung ist, wobei der Gehalt an Aluminium und Mangan in der Legierung zusammen mindestens 90 Gew.-%, bezogen auf das Gewicht der Beschichtung, beträgt, wobei die Legierung mehr Aluminium als Mangan nach Gewicht aufweist, und,
wobei das primäre Strukturelement (1) und das sekundäre Strukturelement (2) in elektrischem Kontakt miteinander stehen.

2. Struktur nach Anspruch 1,
wobei das Metall des primären und/oder des sekundären Strukturelements (2) aus Stahl ist, zum Beispiel aus Weichstahl.

3. Struktur nach Anspruch 2,
wobei das Metall des primären Strukturelements (1) und/oder des sekundären Strukturelements (2) aus Stahl mit einem Kohlenstoffgehalt von 0,5 % oder weniger ist, und/oder
wobei das Metall des primären Strukturelements (1) und/oder des sekundären Strukturelements (2) aus niedriglegiertem Stahl ist, wobei der niedriglegierte Stahl optional 8 % oder weniger Legierungselemente enthält.

4. Struktur nach einem der vorhergehenden Ansprüche,
wobei die Struktur ferner eine Funktionseinrichtung umfasst, wobei die Funktionseinrichtung durch ein sekundäres Strukturelement (2) mit einem primären Strukturelement (1) verbunden ist, wobei optional die Funktionseinrichtung eine von einem Solarmodul, einem Schaltkasten, einem Kabel, einem Sensor oder einem Abgassystem ist.

5. Struktur nach einem der vorhergehenden Ansprüche,
wobei der Aluminiumgehalt in der Beschichtung des sekundären Strukturelements (2) mindestens 75 Gew.-%, bezogen auf das Gewicht der Beschichtung, beträgt, und optional mindestens 80 Gew.-% des Restes der Beschichtung Mangan ist.

6. Struktur nach Anspruch 5,
wobei die Beschichtung des sekundären Strukturelements (2) 81 bis 83 Gew.-% Aluminium und 19 bis 17 Gew.-% Mangan, bezogen auf das Gewicht der Beschichtung, aufweist, oder
wobei die Beschichtung des sekundären Strukturelements (2) 84 bis 86 Gew.-% Aluminium und 16 bis 14 Gew.-% Mangan, bezogen auf das Gewicht der Beschichtung, aufweist, oder
wobei die Beschichtung des sekundären Strukturelements (2) 94 bis 96 Gew.-% Aluminium und 6 bis 4 Gew.-% Mangan, bezogen auf das Gewicht der Beschichtung, aufweist.

7. Struktur nach einem der vorhergehenden Ansprüche,
wobei die Beschichtung des primären Strukturelements (1) eine Zinkbeschichtung mit mindestens 90 Gew.-% reinem Zink, eine Zink-Eisen-Legierungsbeschichtung, eine Zink-Aluminium-Legierungsbeschichtung, eine Zink-Magnesium-Legierungsbeschichtung oder eine Aluminium-Zink-Legierungsbeschichtung ist,
wobei optional die Beschichtung des primären Strukturelements (1) eine Heißtauchbeschichtung ist.

8. Verfahren zur Herstellung einer Struktur nach einem der vorhergehenden Ansprüche, wobei das Verfahren umfasst:
- Bereitstellen eines ersten Metallsubstrats,
- Versehen des ersten Metallsubstrats mit einer Beschichtung, die eine Zink enthaltende Zusammensetzung mit einem Zinkgehalt von mindestens 40 Gew.-%, bezogen auf das Gewicht der Beschichtung, aufweist, wodurch das primäre Strukturelement (1) erhalten wird,
- Bereitstellen eines zweiten Metallsubstrats,
- Anordnen des zweiten Metallsubstrats in einem Bad aus ionischer Flüssigkeit,
- Ätzen des zweiten Metallsubstrats,
- Bereitstellen einer Quelle von Aluminium und Mangan,
- elektrochemisches Abscheiden einer Beschichtung aus der ionischen Flüssigkeit auf das zweite Metallsubstrat, wobei die Beschichtung eine Legierung ist, die Aluminium und Mangan aufweist, wobei in der Legierung der Gehalt an Aluminium und Mangan zusammen mindestens 90 Gew.-%, bezogen auf das Gewicht der Beschichtung, beträgt, wobei die Legierung mehr Aluminium als Mangan nach Gewicht aufweist, wodurch das sekundäre Strukturelement (2) erhalten wird, und optional, während der elektrochemischen Abscheidung, Rühren der ionischen Flüssigkeit,
- Verbinden des primären Strukturelements (1) und des sekundären Strukturelements (2) miteinander derart, dass das primäre Strukturelement (1) und das sekundäre Strukturelement (2) in elektrischem Kontakt miteinander stehen.

9. Verfahren nach Anspruch 8,
wobei die ionische Flüssigkeit eine Kombination aus 1-Ethyl-3-methylimidazoliumchlorid (EMIMCl) und Aluminiumchlorid (AlCl3) ist, vorzugsweise in einem molaren Verhältnis von 1:1,5, und ferner MnCI2, vorzugsweise zwischen 0,01 Gew.-% und 5 Gew.-% MnCl2, optional zwischen 0,02 Gew.-% und 1 Gew.-% MnCl2, bezogen auf das Gewicht der ionischen Flüssigkeit, umfasst.

10. Verfahren nach einem der Ansprüche 8 bis 9,
wobei das Ätzen des zweiten Metallsubstrats und die elektrochemische Abscheidung der Beschichtung aus einer Legierung aus Aluminium und Mangan in dem gleichen Bad aus ionischer Flüssigkeit durchgeführt werden.

11. Verfahren nach einem der Ansprüche 8 bis 10,
wobei das Ätzen des zweiten Metallsubstrats elektrochemisches Ätzen ist, wobei gegebenenfalls das elektrochemische Ätzen des zweiten Metallsubstrats bei einer Spannung zwischen 0,5 V und 1,5 V gegenüber einer Aluminiumelektrode durchgeführt wird, vorzugsweise während 1 Sekunde bis 90 Sekunden.

12. Verfahren nach einem der Ansprüche 8 bis 11,
wobei die elektrochemische Abscheidung der Beschichtung, die eine Aluminium und Mangan aufweisende Legierung ist, einen Prozessparameter aufweist, der die Stromdichte ist, wobei die Stromdichte zwischen 2 A/dm² und 7 A/dm², vorzugsweise 4 A/dm² beträgt.

13. Verfahren nach einem der Ansprüche 8 bis 12,
wobei die Beschichtung des primären Strukturelements (1) auf mindestens eine der folgenden Weisen aufgebracht wird:
- durch Eintauchen des ersten Metallsubstrats in ein Schmelzbad, das einen Zinkgehalt von mindestens 99 Gew.-% enthält,
- durch Aufbringen einer Zinkbeschichtung durch Eintauchen des ersten Metallsubstrats in ein Schmelzbad, das einen Zinkgehalt von mindestens 99 Gew.-% enthält, und einem anschließenden Tempern, das eine Eisen-Zink-Beschichtung mit einem Eisengehalt von normalerweise 8 Gew.-% bis 12 Gew.-%, bezogen auf das Gewicht der Beschichtung, erzeugt,
- durch Eintauchen des ersten Metallsubstrats in ein Schmelzbad, das aus Zink und ungefähr 5 Gew.-% Aluminium und geringen Mengen an Mischmetall zusammengesetzt ist,
- durch Durchführen des ersten Metallsubstrats durch ein Zink-Schmelzbad mit Aluminium- und Magnesiumgehalten in einem Betrag von 1,5 Gew.-% bis 8 Gew.-%,
- durch Eintauchen des ersten Metallsubstrats in ein Schmelzbad, das aus 55 Gew.-% Aluminium, 1,6 Gew.-% Silizium und dem Rest Zink zusammengesetzt ist.

14. Verfahren nach einem der Ansprüche 8 bis 13,
wobei das Material des ersten Metallsubstrats und/oder des zweiten Metallsubstrats Stahl mit einem Kohlenstoffgehalt von 0,5 % oder weniger ist.

15. Verfahren nach einem der Ansprüche 8 bis 14,
wobei das Material des ersten Metallsubstrats und/oder des zweiten Metallsubstrats niedriglegierter Stahl ist, wobei der niedriglegierte Stahl gegebenenfalls 8 % oder weniger Legierungselemente enthält.

## Revendications

1. Structure pour une utilisation dans un environnement corrosif, comprenant :
- un élément structurel (1) principal, lequel élément structurel (1) principal se compose de métal et est doté d'un revêtement, lequel revêtement a une composition comprenant du zinc en une teneur d'au moins 40 % en poids par rapport au poids du revêtement,
- un élément structurel (2) secondaire, lequel élément structurel (2) secondaire se compose de métal et est doté d'un revêtement, lequel revêtement est un alliage comprenant de l'aluminium et du manganèse, la teneur combinée en aluminium et manganèse dans ledit alliage est d'au moins 90 % en poids par rapport au poids du revêtement, lequel alliage comprend plus d'aluminium que de manganèse en poids, et
dans laquelle l'élément structurel (1) principal et l'élément structurel (2) secondaire sont en contact électrique l'un avec l'autre.

2. Structure selon la revendication 1,
dans laquelle le métal de l'élément structurel (1) principal et/ou l'élément structurel (2) secondaire est un acier, par exemple un acier doux.

3. Structure selon la revendication 2,
dans laquelle le métal de l'élément structurel (1) principal et/ou de l'élément structurel (2) secondaire est un acier ayant une teneur en carbone inférieure ou égale à 0,5 %, et/ou
dans laquelle le métal de l'élément structurel (1) principal et/ou de l'élément structurel (2) secondaire est un acier faiblement allié, lequel acier faiblement allié contient facultativement 8 % ou moins d'éléments d'alliage.

4. Structure selon l'une quelconque des revendications précédentes,
dans laquelle la structure comprend en outre un dispositif fonctionnel, le dispositif fonctionnel étant relié à l'élément structurel (1) principal par le biais d'un élément structurel (2) secondaire,
dans laquelle facultativement le dispositif fonctionnel est un dispositif choisi parmi un panneau solaire, une boîte de commutation, un câble, un capteur, un système d'échappement.

5. Structure selon l'une quelconque des revendications précédentes,
dans laquelle la teneur en aluminium dans le revêtement de l'élément structurel (2) secondaire est d'au moins 75 % en poids par rapport au poids du revêtement, et facultativement au moins 80 % en poids du reste du revêtement sont du manganèse.

6. Structure selon la revendication 5,
dans laquelle le revêtement de l'élément structurel (2) secondaire comprend de 81 à 83 % en poids d'aluminium et de 19 à 17 % en poids de manganèse, par rapport au poids du revêtement, ou
dans laquelle le revêtement de l'élément structurel (2) secondaire comprend de 84 à 86 % en poids d'aluminium et de 16 à 14 % en poids de manganèse, par rapport au poids du revêtement, ou
dans laquelle le revêtement de l'élément structurel (2) secondaire comprend de 94 à 96 % en poids d'aluminium et de 6 à 4 % en poids de manganèse, par rapport au poids du revêtement.

7. Structure selon l'une quelconque des revendications précédentes,
dans laquelle le revêtement de l'élément structurel (1) principal est un revêtement de zinc ayant au moins 90 % en poids de zinc pur, un revêtement d'alliage de zinc-fer, un revêtement d'alliage de zinc-aluminium, un revêtement d'alliage de zinc-magnésium ou un revêtement d'alliage d'aluminium-zinc,
dans laquelle facultativement le revêtement de l'élément structurel (1) principal est un revêtement par immersion à chaud.

8. Procédé de fabrication d'une structure selon l'une quelconque des revendications précédentes, lequel procédé comprend :
- la fourniture d'un premier substrat métallique,
- la fourniture au premier substrat métallique d'un revêtement ayant une composition comprenant du zinc en une teneur d'au moins 40 % en poids par rapport au poids du revêtement, obtenant ainsi l'élément structurel (1) principal,
- la fourniture d'un second substrat métallique,
- l'arrangement du second substrat métallique dans un bain de liquide ionique,
- la gravure du second substrat métallique,
- la fourniture d'une source d'aluminium et de manganèse,
- le dépôt électrochimique d'un revêtement à partir du liquide ionique sur le second substrat métallique, lequel revêtement est un alliage comprenant de l'aluminium et du manganèse, la teneur combinée en aluminium et manganèse dans l'alliage est d'au moins 90 % en poids par rapport au poids du revêtement, lequel alliage comprend plus d'aluminium que de manganèse en poids, obtenant ainsi l'élément structurel (2) secondaire et facultativement, pendant ce dépôt électrochimique, l'agitation du liquide ionique,
- la mise en contact de l'élément structurel (1) principal et de l'élément structurel (2) secondaire l'un avec l'autre de telle sorte que l'élément structurel (1) principal et de l'élément structurel (2) secondaire soient en contact électrique l'un avec l'autre.

9. Procédé selon la revendication 8,
dans lequel le liquide ionique est une combinaison de chlorure de 1-éthyl-3-méthylimidazolium (EMIMCI) et de chlorure d'aluminium (AlCl₃), de préférence selon un rapport molaire de 1:1,5 et comprend en outre du MnCl₂, de préférence entre 0,01 % en poids et 5 % en poids de MnCl₂, facultativement entre 0,02 % en poids et 1 % en poids de MnCl₂, par rapport au poids du liquide ionique.

10. Procédé selon l'une quelconque des revendications 8 à 9,
dans lequel la gravure du second substrat métallique et le dépôt électrochimique du revêtement d'un alliage comprenant de l'aluminium et du manganèse sont réalisés dans le même bain de liquide ionique.

11. Procédé selon l'une quelconque des revendications 8 à 10,
dans lequel la gravure du second substrat métallique est une gravure électrochimique,
dans lequel facultativement la gravure électrochimique du second substrat métallique est réalisée à une tension comprise entre 0,5 V et 1,5 V par rapport à une électrode d'aluminium, de préférence pendant 1 seconde à 90 secondes.

12. Procédé selon l'une quelconque des revendications 8 à 11,
dans lequel le dépôt électrochimique du revêtement qui est un alliage comprenant de l'aluminium et du manganèse a un paramètre de procédé qui est la densité de courant, laquelle densité de courant est comprise entre 2 A/dm² et 7 A/dm², de préférence de 4 A/dm².

13. Procédé selon l'une quelconque des revendications 8 à 12,
dans lequel le revêtement de l'élément structurel (1) primaire est appliqué selon au moins une des façons suivantes :
- par immersion du premier substrat métallique dans un bain de fusion contenant une teneur en zinc d'au moins 99 % en poids,
- par application d'un revêtement de zinc par immersion du premier substrat métallique dans un bain de fusion contenant une teneur en zinc d'au moins 99 % en poids et un recuit ultérieur produisant un revêtement de fer-zinc ayant une teneur en fer normalement de 8 % en poids à 12 % en poids par rapport au poids du revêtement,
- par immersion du premier substrat métallique dans un bain de fusion qui se compose de zinc et d'environ 5 % en poids d'aluminium et de petites quantités de mischmétal,
- par passage du premier substrat métallique dans un bain de zinc fondu avec une somme des teneurs en aluminium et magnésium de 1,5 % en poids à 8 % en poids,
- par immersion du premier substrat métallique dans un bain de fusion qui se compose de 55 % en poids d'aluminium, de 1,6 % en poids de silicium et le reste de zinc.

14. Procédé selon l'une quelconque des revendications 8 à 13,
dans lequel le matériau du premier substrat métallique et/ou du second substrat métallique est un acier ayant une teneur en carbone inférieure ou égale à 0,5 %.

15. Procédé selon l'une quelconque des revendications 8 à 14,
dans lequel le matériau du premier substrat métallique et/ou du second substrat métallique est un acier faiblement allié, lequel acier faiblement allié contient facultativement 8 % ou moins d'éléments d'alliage.
